(19) Europäisches Patentamt
European Patent Office
Office européen des brevets

(11) EP 3 217 455 A1

(12) EUROPEAN PATENT APPLICATION

(43) Date of publication:
13.09.2017 Bulletin 2017/37

(51) Int Cl.:
H01M 4/66 (2006.01)    H01M 10/42 (2006.01)

(21) Application number: 16159982.4

(22) Date of filing: 11.03.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Lithium Energy and Power GmbH & Co.
KG
70469 Stuttgart (DE)

(72) Inventors:
• Deromelaere, Gaetan
  70806 Kornwestheim (DE)
• Konishi, Daisuke
  70191 Stuttgart (DE)
• Klinsmann, Markus
  70195 Stuttgart (DE)

(74) Representative: Bee, Joachim
Robert Bosch GmbH, C/IPE
P.O. Box 30 02 20
70442 Stuttgart (DE)

(54) ELECTRODE ASSEMBLY AND BATTERY CELL

(57) The invention concerns an electrode assembly (10), for a battery cell, containing an anode (11) and a cathode (12) that are divided from one another by means of a separator (18), the anode (11) containing an anode active material layer (21) and an anode current collector layer (23), the cathode (12) containing a cathode active material layer (22) and a cathode current collector layer (24), wherein at least on current collector layer (23, 24) comprises a PTC layer (40) which is interposed between a first conductor layer (41) and a second conductor layer (42). Thereat, the first conductor layer (41) and the second conductor layer (42) are provided in form of segments (51, 52) which are electrically insulated from each other.

FIG. 4

**Description**

The invention relates to an electrode assembly for a battery cell which contains an anode and a cathode that are divided from one another by means of a separator. The anode contains an anode active material layer and an anode current collector layer, the cathode contains a cathode active material layer and a cathode current collector layer.

State of the Art

Electrical energy can be stored by means of batteries. Batteries convert chemical energy into electrical energy. Particularly, rechargeable batteries are known to be able to be charged and discharged several times. Batteries or battery systems comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes and the separator are impregnated by an electrolyte that is normally in liquid state or in solid state. The electrodes of the electrode assemblies are connected to the terminals of the battery cell. The battery cell can be charged and discharged via the terminals.

Both, the cathode and the anode, comprise a current collector on which an active material is applied. The current collector of the cathode is typically made of aluminium and the current collector of the anode is typically made of copper. The active material for the cathode is, for example, a metal oxide. The active material for the anode is, for example, graphite or silicon. In the active material of the anode lithium atoms are intercalated.

If such a battery cell is brought outside normal conditions, in particular by internal short circuit, the inner temperature of the battery cell can excessively rise. When the battery cell exceeds a critical temperature, exothermic chemical reactions are initiated between the electrodes and the electrolyte, raising the internal pressure and temperature. The increased temperature accelerates those chemical reactions. If the temperature in the battery cell is sufficiently high, a thermal runaway may occur, which may destroy the battery cell.

Another possible measure to prevent thermal failure is the usage of positive temperature coefficient (PTC) elements. PTC elements exhibit a large increase in resistance with rising temperature. Hence, currents caused by short circuits produce rising temperature and thus rising resistance of the PTC elements limiting the current.

Document KR 10 2005 0090748 A discloses a current collector for a battery having PTC characteristics. The current collector comprises an active material layer, a first collector layer, a second collector layer and a PTC material layer interposed between the collector layers.

Document JP 2004 178914 A discloses a bipolar electrode and a bipolar battery using said electrode. The electrode comprises a PTC layer and current collectors that are laminated on both surfaces of the PTC layer.

Disclosure of the Invention

An electrode assembly for a battery cell, particularly a lithium ion battery cell, is proposed. The electrode assembly contains an anode and a cathode that are divided from one another by means of a separator. The anode contains an anode active material layer and an anode current collector layer, the cathode contains a cathode active material layer and a cathode current collector layer. At least on current collector layer, that means the anode current collector layer or the cathode current collector layer, comprises a PTC layer, a first conductor layer and a second conductor layer. The PTC layer is interposed between the first conductor layer and the second conductor layer. The PTC layer is made of a material which has positive temperature coefficient behaviour. Hence, electrical resistance of said PTC layer is increasing with rising temperature.

According to the invention, the first conductor layer is provided in form of first segments which are electrically insulated from each other. Also, the second conductor layer is provided in form of second segments which are electrically insulated from each other. The first segments of the first conductor layer are separated from the second segments of the second conductor layer by the PTC layer which is interposed in between.

According to an advantageous embodiment of the invention, the first segments of the first conductor layer and second segments of the second conductor layer are shaped lamellar.

According to a further development of the invention, the first segments of the first conductor layer extend parallel to the second segments of the second conductor layer.

According to a possible embodiment of the invention, the first segments of the first conductor layer align with the second segments of the second conductor layer.

According to another possible embodiment of the invention, the first segments of the first conductor layer are shifted relative to the second segments of the second conductor layer.

According to another further development of the invention, the first segments of the first conductor layer extend perpendicular to the second segments of the second conductor layer.

Advantageously, a width of the segments of the first conductor layer corresponds to a width of a space between adjacent segments of the first conductor layer. Also advantageously, a width of the segments of the second conductor layer corresponds to a width of a space between adjacent segments of the second conductor layer.

Preferably, the PTC layer is made of a polymer, such as, for example, PE or PVDF, into which carbon black is mixed. The carbon black particles build a conductive network at room temperature. However, as the polymer expands with elevated temperature, the carbon black particles separate and electric conductivity decreases.

Furthermore, a battery cell is proposed which comprises at least one electrode assembly according to the invention.

A battery cell according to the invention is usable advantageously in particular in an electric vehicle (EV), in a hybrid electric vehicle (HEV), in a plug-in hybrid vehicle (PHEV), in a stationary battery or in a battery in a marine application. But also other applications are feasible.

Advantages of the Invention

In an electrode assembly according to the invention, electrically conductive paths from the active material of the electrode to the terminals of a battery cell are designed such that current, in particular in case of a short circuit, has to pass the PTC layer not only once but several times. Hence, the electrical resistance within a short circuit scales with the number of necessary passages through the PTC layer. In case of rising temperature within the battery cell and electrode assembly caused by currents of short circuits, electrical resistance of the PTC layer is rising and thus limiting the current. Hence, thermal runaway as well as destruction of the battery cell is prevented.

Brief Description of the Drawings

For a better understanding of the aforementioned embodiments of the invention as well as additional embodiments thereof, reference should be made to the description of embodiments below, in conjunction with the appended drawings showing:

Figure 1     a schematic view at a battery cell,

Figure 2     a schematic sectional view at an electrode assembly having a simplified structure,

Figure 3     an equivalent circuit diagram of the electrode assembly shown in figure 2,

Figure 4     a schematic sectional view at an electrode assembly of the battery cell shown in figure 1,

Figure 5     an equivalent circuit diagram of the electrode assembly shown in figure 4,

Figure 6     a schematic perspective view at an electrode assembly according to a possible embodiment,

Figure 7     a schematic perspective view at an electrode assembly according to another possible embodiment and

Figure 8     a schematic perspective view at an electrode assembly according to yet another possible embodiment.

Hereinafter, preferred embodiments of the present invention will be described with reference to the drawings. The drawings only provide schematic views of the invention. Like reference numerals refer to corresponding parts, elements or components throughout the figures, unless indicated otherwise.

Description of Embodiments

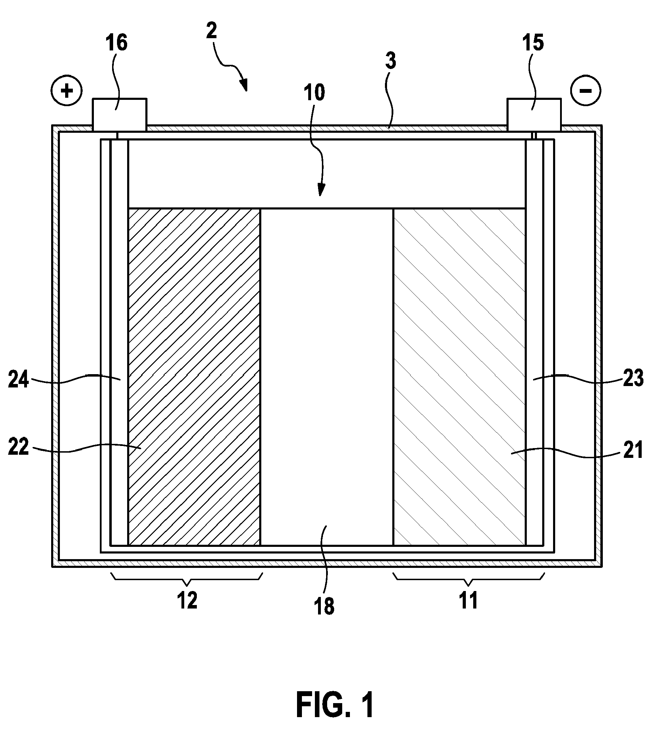

Figure 1 shows a schematic view at a battery cell 2. The battery cell 2 contains a housing 3 which has, for example, a prismatic or a cylindrical shape. The battery cell 2 further contains an electrode assembly 10, which is arranged within the housing 3. The housing 3 is filled with a liquid electrolyte such that the electrode assembly 10 is impregnated by the electrolyte.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

Presently, the electrode assembly 10 is shaped as a jelly roll. That means the anode 11 and the cathode 12 of the electrode assembly 10 are flat foils that are wound about a winding axis A. The separator 18 that is also a flat foil is wound between the anode 11 and the cathode 12 about the same winding axis A.

The anode 11 of the electrode assembly 10 contains an anode active material layer 21 formed as a flat foil and an anode current collector layer 23 formed as a flat foil. The anode active material layer 21 and the anode current collector layer 23 are attached to one another. The anode current collector layer 23 is electrically connected to the negative terminal 15 of the battery cell 2.

The cathode 12 of the electrode assembly 10 contains a cathode active material layer 22 formed as a flat foil and a cathode current collector layer 24 formed as a flat foil. The cathode active material layer 22 and the cathode current collector layer 24 are attached to one another. The cathode current collector layer 24 is electrically connected to the positive terminal 16 of the battery cell 2.

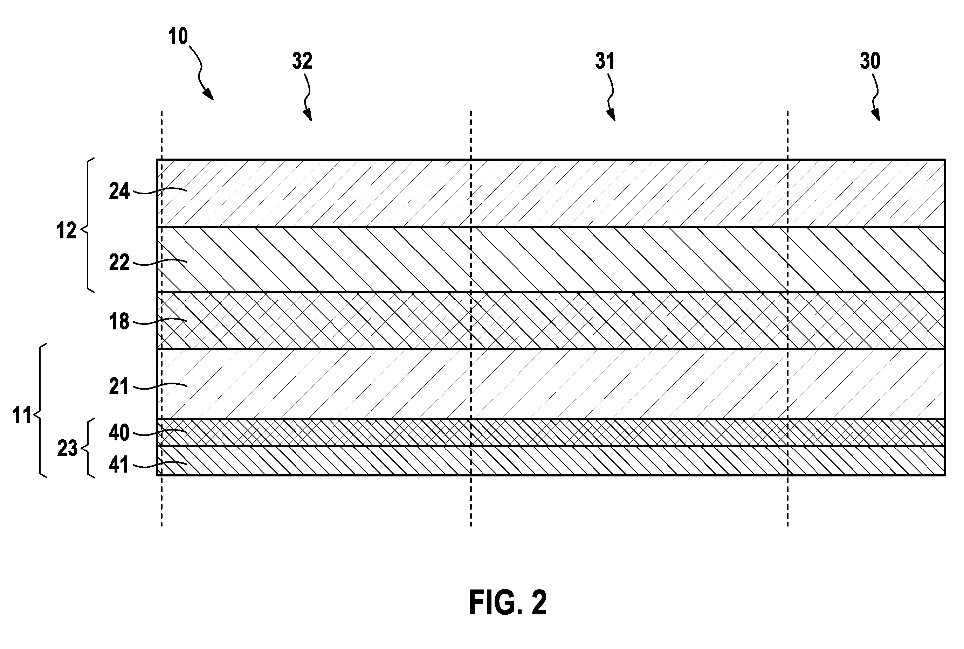

Figure 2 shows a schematic sectional view at an electrode assembly 10 having a simplified structure. The electrode assembly 10 comprises an anode 11, a cathode 12 and a separator 18 arranged in between. The cathode current collector layer 24 is electrically conductive and is made of a metal, in particular of aluminium.

The anode current collector layer 23 is also electrically conductive. The anode current collector layer 23 comprises a PTC layer 40 and a first conductor layer 41. The PTC layer 40 is arranged between the anode active material layer 21 and the first conductor layer 41. The first conductor layer 41 is made of a metal, in particular of copper. The PTC layer 40 is made of a material which has positive temperature coefficient behaviour, in particular of a polymeric material (PE or PVDF), mixed with carbon black.

Alternatively or additionally, the cathode current collector layer 24 could comprise a PTC layer 40 and a first conductor layer 41. In this case, the PTC layer 40 would be arranged between the cathode active material layer 22 and the first conductor layer 41.

During discharge of the battery cell 2, electrons that leave the anode active material layer 21 have to pass the PTC layer 40 once to arrive at the first conductor layer 41 which is electrically connected to the negative terminal 15 of the battery cell 2.

Virtually, the electrode assembly 10 is divided into several volume portions whereat a base volume portion 30, a first volume portion 31 and a second volume portion 32 are shown here. Said volume portions 30, 31, 32 correspond to several electrical circuits that are arranged in parallel.

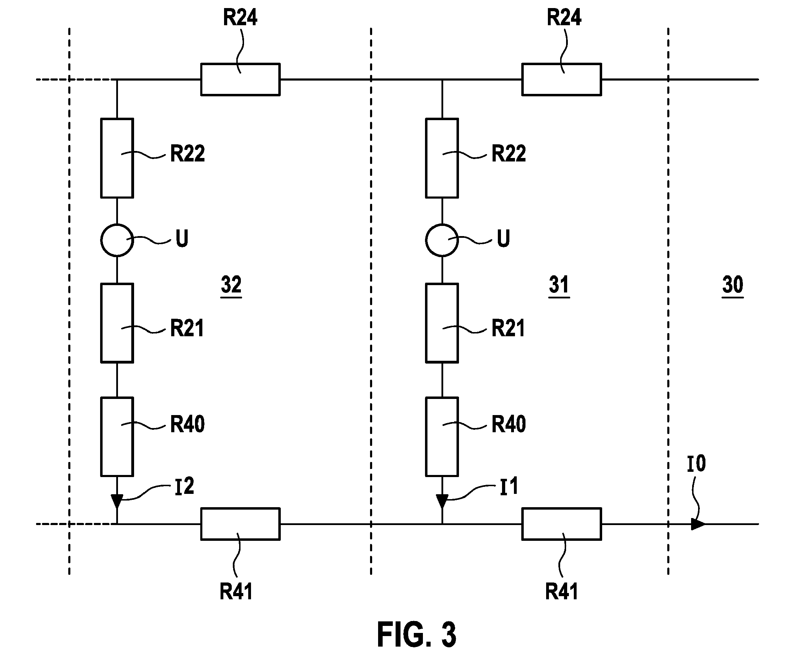

Figure 3 shows an equivalent circuit diagram of the electrode assembly 10 shown in figure 2. Each of the volume portions 31, 32 is considered as an electrical circuit comprising a voltage source providing a voltage U and further elements. The base volume portion 30 here is considered to simulate a short circuit between the cathode current collector layer 24 and at the first conductor layer 41 of the anode current collector layer 23. Hence, the elements of the base volume portion 30 are bypassed electrically and are therefore not shown here.

In said case of short circuit in the base volume portion 30, a total current I0 is flowing towards the base volume portion 30 which is the sum of a first current I1 of the first volume portion 31 and a second current I2 of the second volume portion 32, as given by the following equation:

$$I0 = I1 + I2$$

The internal resistance of the volume portions 31, 32 depends on the cathode current collector resistor R24, the cathode active material resistor R22, the anode active material resistor R21, first conductor resistor R41 and the PTC resistor R40.

Further effects, in particular ionic resistances due to ion diffusion through the electrolyte, are neglected here. Furthermore, a current path within the PTC layer 40 which extends parallel to the first conductor layer 41 is neglected as well due to the low conductivity of the PTC material of the PTC layer 40 in comparison to the conductivity of the metallic first conductor layer 41.

The first current I1 can be calculated by the following equation:

$$I1 = U / (R24 + R22 + R21 + R40 + R41)$$

The second current I2 can be calculated by the following equation:

$$I2 = U / (2*R24 + R22 + R21 + R40 + 2*R41)$$

It is assumed that the cathode current collector resistor R24 and the first conductor resistor R41 have significantly smaller resistances than the remaining resistors R22, R21, R40.

Hence, the total current I0 in case of short circuit can be calculated approximately by the following equation:

$$I0 = 2*U / (R22 + R21 + R40)$$

When the electrode assembly 10 is divided virtually into n volume portions, whereat n is a positive number, the total current I0 in case of short circuit can be calculated approximately by the following equation:

$$I0 = n*U / (R22 + R21 + R40)$$

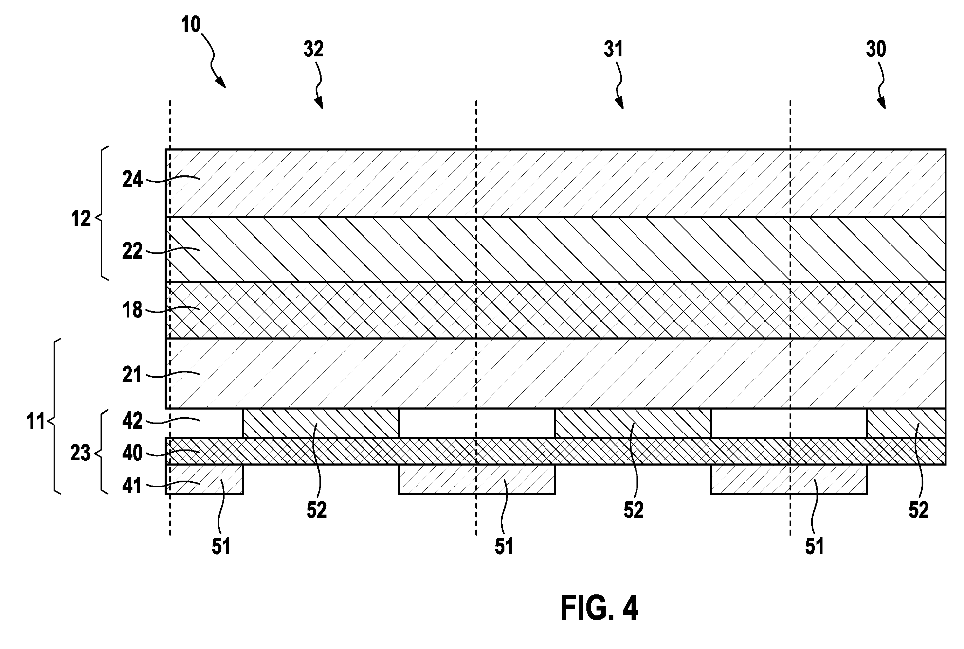

Figure 4 shows a schematic sectional view at an electrode assembly 10 of the battery cell 2 shown in figure 1. The electrode assembly 10 comprises an anode 11, a cathode 12 and a separator 18 arranged in between. The cathode current collector layer 24 is electrically conductive and is made of a metal, in particular of aluminium.

The anode current collector layer 23 is also electrically conductive. The anode current collector layer 23 comprises a PTC layer 40, a first conductor layer 41 and a second conductor layer 42. The PTC layer 40 is interposed between the first conductor layer 41 and the second conductor layer 42. The second conductor layer 42 is arranged adjacent to the anode active material layer 21. The first conductor layer 41 and the second conductor layer 42 are made of a metal, in particular of copper. The PTC layer 40 is made of a material which has positive temperature coefficient behaviour, in particular of a polymeric material (PE, PVDF,...), mixed with carbon black.

The first conductor layer 41 is provided in form of several first segments 51 that are shaped lamellar and that are electrically insulated from one another. In this embodiment, a width of spaces between adjacent first segments 51 corresponds to a width of the first segments 51.

The second conductor layer 42 is provided in form of several second segments 52 that are shaped lamellar and that are electrically insulated from one another. In this embodiment, a width of spaces between adjacent second segments 52 corresponds to a width of the second segments 52.

In this embodiment, the width of the first segments 51 corresponds to the width of the second segments 52. The first segments 51 extend parallel to the second segments 52 whereat the first segments 51 are shifted relative to the second segments 52.

Alternatively or additionally, the cathode current collector layer 24 could comprise a PTC layer 40, a first conductor layer 41 and a second conductor layer 42, each conductor layer 41, 42 provided in form of several segments 51, 52. In this case, the second conductor layer 42 would be arranged adjacent to the cathode active material layer 22.

Virtually, the electrode assembly 10 is divided into several volume portions whereat a base volume portion 30, a first volume portion 31 and a second volume portion 32 are shown here. Said volume portions 30, 31, 32 are designed such that each second segment 52 is assigned to exactly one volume portion 30, 31, 32. Each first segment 51 is assigned to adjacent volume portions 30, 31, 32. The volume portions 30, 31, 32 correspond to several electrical circuits that are arranged in parallel.

During discharge of the battery cell 2, electrons that leave the anode active material layer 21 of one volume portion 30, 31, 32 have to pass a second segment 52 of the second conductor layer 42 and the PTC layer 40 once to arrive at a first segment 51 of the first conductor layer 41. Then said electrons have to pass the PTC layer 40 once more to arrive at a second segment 52 of the second conductor layer 42 of an adjacent volume portion 30, 31, 32.

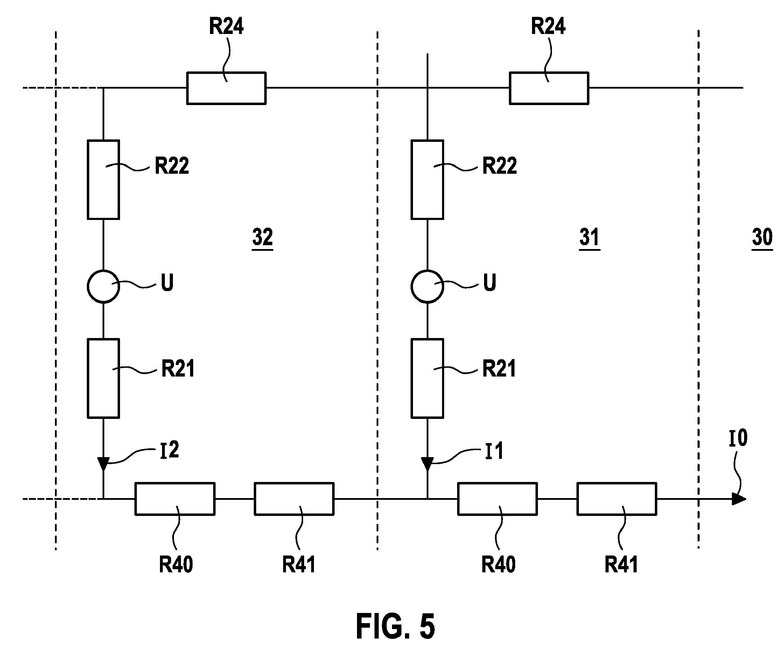

Figure 5 shows an equivalent circuit diagram of the electrode assembly 10 shown in figure 4. Each of the volume portions 31, 32 is considered as an electrical circuit comprising a voltage source providing a voltage U and further elements. The base volume portion 30 here is considered to simulate a short circuit between the cathode current collector layer 24 and at the first conductor layer 41 of the anode current collector layer 23. Hence, the elements of the base volume portion 30 are bypassed electrically and are therefore not shown here.

In said case of short circuit in the base volume portion 30, a total current I0 is flowing towards the base volume portion 30 which is the sum of a first current I1 of the first volume portion 31 and a second current I2 of the second volume portion 32, as given by the following equation:

$$I0 = I1 + I2$$

The internal resistance of the volume portions 31, 32 depends on the cathode current collector resistor R24, the cathode active material resistor R22, the anode active material resistor R21, first conductor resistor R41 and the PTC resistor R40. Thereat, the resistance of the PTC resistor R40 corresponds to one transition from a second segment 52 to a first segment 51 and one further transition to an adjacent second segment 52. The resistance of the first conductor resistor R41 corresponds to a flow through a first segment 51 and through a second segment 52.

Further effects, in particular ionic resistances due to ion diffusion through the electrolyte, are neglected here. Furthermore, a current path within the PTC layer 40 which extends parallel to the first conductor layer 41 and to the second conductor layer 42 is neglected here as well due to the low conductivity of the PTC material of the PTC layer 40 in comparison to the conductivity of the metallic first conductor layer 41 and the metallic second conductor layer 42.

The first current I1 can be calculated by the following equation:

$$I1 = U / (R24 + R22 + R21 + R40 + R41)$$

The second current I2 can be calculated by the following equation:

$$I2 = U / (2*R24 + R22 + R21 + 2*R40 + 2*R41)$$

It is assumed that the cathode current collector resistor R24 and the first conductor resistor R41 have significantly smaller resistances than the remaining resistors R22, R21, R40.

Hence, the total current I0 in case of short circuit can be calculated approximately by the following equation:

$$I0 = U / (R22 + R21 + R40)$$

$$+ U / (R22 + R21 + 2*R40)$$

When the electrode assembly 10 is divided virtually into n volume portions, whereat n is a positive number, the total current I0 in case of short circuit can be calculated approximately by the following equation:

$$I0 = U / (R22 + R21 + R40)$$
$$+ U / (R22 + R21 + 2*R40)$$
$$+ ...........................$$
$$+ U / (R22 + R21 + n*R40)$$

Hence, in case of a short circuit the total current I0 in an electrode assembly 10 according to the invention as shown in figure 4 is smaller than the total current I0 in an electrode assembly 10 as shown in figure 2 for reference purpose.

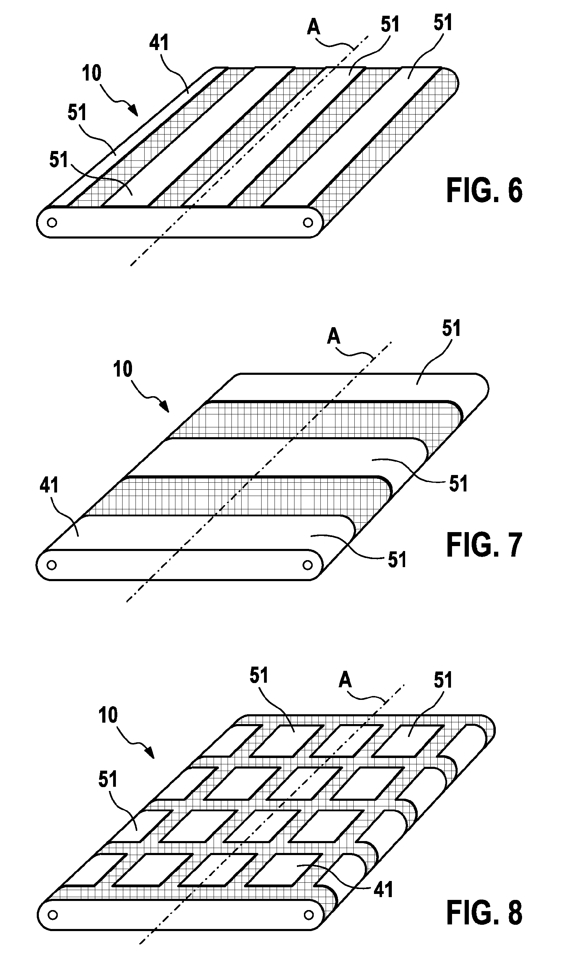

Figure 6 shows a schematic perspective view at an electrode assembly 10 according to a possible embodiment of the invention shaped as a jelly roll. In this presentation, the first conductor layer 41 is arranged at the outer circumference of the jelly roll. The first conductor layer 41 is provided in form of lamellar first segments 51 that extend parallel to the winding axis A.

Figure 7 shows a schematic perspective view at an electrode assembly 10 according to another possible embodiment shaped as a jelly roll. In this presentation, the first conductor layer 41 is arranged at the outer circumference of the jelly roll. The first conductor layer 41 is provided in form of lamellar first segments 51 that extend circumferential to the winding axis A.

Figure 8 shows a schematic perspective view at an electrode assembly 10 according to yet another possible embodiment shaped as a jelly roll. In this presentation, the first conductor layer 41 is arranged at the outer circumference of the jelly roll. The first conductor layer 41 is provided in form of first segments 51 that are shaped like spots and that are surrounded by latticed space.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

**Claims**

1.  Electrode assembly (10), for a battery cell (2), containing
    an anode (11) and a cathode (12) that are divided from one another by means of a separator (18),
    the anode (11) containing an anode active material layer (21) and an anode current collector layer (23),
    the cathode (12) containing a cathode active material layer (22) and a cathode current collector layer (24),
    wherein at least one current collector layer (23, 24) comprises a PTC layer (40) which is interposed between a first conductor layer (41) and a second conductor layer (42),
    **characterised in that**
    the first conductor layer (41) and the second conductor layer (42) are provided in form of segments (51, 52) which are electrically insulated from each other.

2.  Electrode assembly (10) according to claim 1, **characterised in that** first segments (51) of the first conductor layer (41) and second segments (52) of the second conductor layer (42) are shaped lamellar.

3.  Electrode assembly (10) according to claim 2, **characterised in that** the first segments (51) extend parallel to the second segments (52).

4.  Electrode assembly (10) according to claim 3, **characterised in that** the first segments (51) align with the second segments (52).

5.  Electrode assembly (10) according to claim 3, **characterised in that** the first segments (51) are shifted relative to the second segments (52).

6.  Electrode assembly (10) according to claim 2, **characterised in that** the first segments (51) extend perpendicular to the second segments (52).

7.  Electrode assembly (10) according to one of claims 2 to 6, **characterised in that**
    a width of the segments (51, 52) corresponds to a width of a space between adjacent segments (51, 52).

8.  Electrode assembly (10) according to one of the preceding claims, **characterised in that**
    the PTC layer (40) is made of a polymeric material mixed with carbon black.

9.  Battery cell (2), comprising at least one electrode assembly (10) according to one of the preceding claims.

10. Usage of a battery cell (2) according to claim 9 in an electric vehicle (EV), in a hybrid electric vehicle (HEV), in a plug-in hybrid vehicle (PHEV), in a stationary battery or in a battery in a marine application.

**FIG. 1**

**FIG. 2**

EP 3 217 455 A1

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

**Application Number**

EP 16 15 9982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 589 597 A1 (MATSUSHITA ELECTRIC IND CO LTD [JP]) 26 October 2005 (2005-10-26) * paragraphs [0067] - [0098], [0104] - [0116], [0158]; figures 3-5 * | 1-10 | INV. H01M4/66 H01M10/42 |
| X | JP 2004 355953 A (NISSAN MOTOR) 16 December 2004 (2004-12-16) | 1,9,10 | |
| A | * paragraphs [0012] - [0015]; figures 2, 10 * | 2-8 | |

TECHNICAL FIELDS
SEARCHED       (IPC)

H01M

The present search report has been drawn up for all claims

| Place of search | Date of completion of the search | Examiner |
|---|---|---|
| The Hague | 19 August 2016 | Hofer, Astrid |

EPO FORM 1503 03.82 (P04C01)

## ANNEX TO THE EUROPEAN SEARCH REPORT
## ON EUROPEAN PATENT APPLICATION NO.

EP 16 15 9982

This annex lists the patent family members relating to the patent documents cited in  the above-mentioned European search report.
The members are as contained in the European Patent Office EDP file on
The European Patent Office is in no way liable for these particulars which are merely given for the purpose of information.

19-08-2016

| Patent document cited in search report | | Publication date | Patent family member(s) | | Publication date |
|---|---|---|---|---|---|
| EP 1589597 | A1 | 26-10-2005 | EP | 1589597 A1 | 26-10-2005 |
| | | | JP | 4472259 B2 | 02-06-2010 |
| | | | JP | 2004253146 A | 09-09-2004 |
| | | | KR | 20050092020 A | 16-09-2005 |
| | | | US | 2006099493 A1 | 11-05-2006 |
| | | | WO | 2004062003 A1 | 22-07-2004 |
| JP 2004355953 | A | 16-12-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050090748 A

- JP 2004178914 A